# EUROPEAN PATENT APPLICATION

(11) **EP 1 145 899 A1**
(43) Date of publication of application: **17.10.2001**
(21) Application number: 01303264.4
(22) Date of filing: 06.04.2001
(51) Int. Cl.: B60N 2/28

(54) **Tether strap for rotatable safety seat**

(30) Priority: 14.04.2000 AU PQ688500
(71) Applicant: Britax Child-Care Products Pty Ltd., Sunshine, Melbourne 3020 (AU)
(72) Inventor: Lumley, Michael Andrew, Torquay, Victoria 3228 (AU); Maciejczyk, Wieslaw, Sunshine, Victoria (AU)
(74) Representative: Hollinghurst, Antony

(57) **Abstract**

A tether arrangement for a safety seat (10) for a motor vehicle where the safety seat (10) is rotatably mounted to a base (11), the tether arrangement having a tether strap (14), a tether connector (17) on said strap (14) for attachment to an anchor point (15), and a strap take up reel (22) such as an inertia reel mounted on said safety seat (10) onto which said tether strap (14) is attached and wound so that when said safety seat (10) is rotated with respect to said base (11), said tether strap (14) unwinds from and back onto said strap take up reel (22). One end of the tether strap (14) can attached to one side of the safety seat (10) with the tether strap passing through the anchor point (15) and the other end of the tether strap (14) attached and wound onto the strap take up reel (22) at the other side of the safety seat (10).

## Description

### FIELD OF INVENTION

This invention relates to a tether strap for a safety seat, and in particular to a tether strap which allows rotation of a safety seat about a vertical axis without disconnection of the tether strap.

### BACKGROUND OF THE INVENTION

Safety seats which are pivotally connected to a base allow the seat to rotate from a forward facing position to a sideways position that will enable easier insertion of an occupant into the safety seat. For example, the safety seat can rotate through 90° so that the seat or seat and occupant are facing the doorway of the motor vehicle. This obviously provides a significant improvement in placing or removing a child into or out of the safety seat.

In order to achieve rotation of the safety seat, it is pivotally attached to a base which in turn is secured to the squab of a motor vehicle seat.

It is desirable, and often required, to have a tether strap which connects the head end of the safety seat to an anchor point. This restrains forward movement of the safety seat during a collision.

However, the rotation of the safety seat will clearly not be possible with the connection of a tether strap to the head end of the safety seat.

Accordingly, the invention is directed to providing a means of using a tether strap with such a safety seat while at the same time enabling easy rotation of the safety seat while the tether strap is connected.

### BRIEF DESCRIPTION OF THE INVENTION

In one form the invention is said to reside in a tether arrangement for a safety seat for a motor vehicle where the safety seat is rotatably mounted to a base, the tether arrangement comprising:
a tether strap,
a tether connector on said strap for attachment to an anchor point, and
a strap take up reel mounted on said safety seat onto which said tether strap is attached and wound so that when said safety seat is rotated with respect to said base, said tether strap is able to unwind from and wind back onto said strap take up reel.

In one embodiment the strap take up wheel is an inertia reel.

The inertia reel may be of a type adapted to sense acceleration or deceleration of the motor vehicle and thereby lock the reel to prevent it from unwinding.

Alternatively the inertia reel may be of a type which when a slow continuous force is applied to the tether strap wound onto the reel the reel will rotate allowing the tether strap to unwind from the reel but if a sudden force is applied to the tether strap, the reel will lock whereby if the safety seat is rotated about its base, the reel will rotate thereby allowing the tether strap to lengthen by unwinding from the reel and unwinding of the inertia reel will tension a spring which will act to rewind the strap when the safety seat is returned to its forward facing position but in an accident situation a sudden force applied by the tether strap to the reel will cause it to lock.

In an alternative embodiment the strap take up reel may be manually operable whereby a manual operation is adapted to enable unwinding of the tether strap and the unwinding of the inertia reel will tension a spring which will act to rewind the strap when the safety seat is returned to its forward facing position.

The manual operation may be the pressing of a button or the like.

A single length of tether strap may be used that extends from the head end of the safety seat to the anchor point.

Alternatively, the tether strap may be used in a V-shaped configuration with one end of the tether strap is attached to one side of the safety seat with the tether strap passing through the anchor point and the other end of the tether strap attached and wound onto the inertia reel at the other side of the safety seat whereby if the safety seat is rotated one way the tether strap can extend directly from the inertia reel to allow the rotation and if the safety seat is rotated the other way the tether strap can extend from the inertia reel and pass through the tether connector to allow lengthening of the tether strap on the other side.

There may be an attachment point or mounting recess for the inertial reel on either side of the head end of the safety seat so that the inertia reel may be placed on either side of the head end of the safety seat so that when the seat can be set up to be rotated to either the right hand side or the left hand side.

Alternatively there may be inertia reels on both sides of the head end of the safety seat so that when the seat can be rotated to either the right hand side or the left hand side.

Such arrangements as discussed above will allow the safety seat to be rotated without disconnection of the tether strap.

### BRIEF DESCRIPTION OF THE DRAWINGS

In order to fully understand the invention, preferred embodiments will now be described. However, it should be realised that the scope of the invention is not to be limited to the features of these embodiment.

The various embodiment is illustrated in the accompanying drawings in which:
Figure 1 shows a perspective view of a safety seat base and tether arrangement according to one embodiment of the invention,
Figures 2a, 2b and 2c are a sequence of drawings illustrating the rotation of the safety seat of Figure 1 from a forward facing position (Figure 2a) through 90° so that the safety seat faces the doorway of the motor vehicle (Figure 2c),
Figure 3 is a part perspective view showing the mounting of an inertia reel in a safety seat,
Figure 4 is a part perspective view showing an alternative embodiment of tether arrangement and mounting of an inertia reel in a safety seat, and
Figure 5 is a part perspective view showing an alternative embodiment of tether arrangement and manually operable take up reel in a safety seat.

### DESCRIPTION OF PREFERRED EMBODIMENT

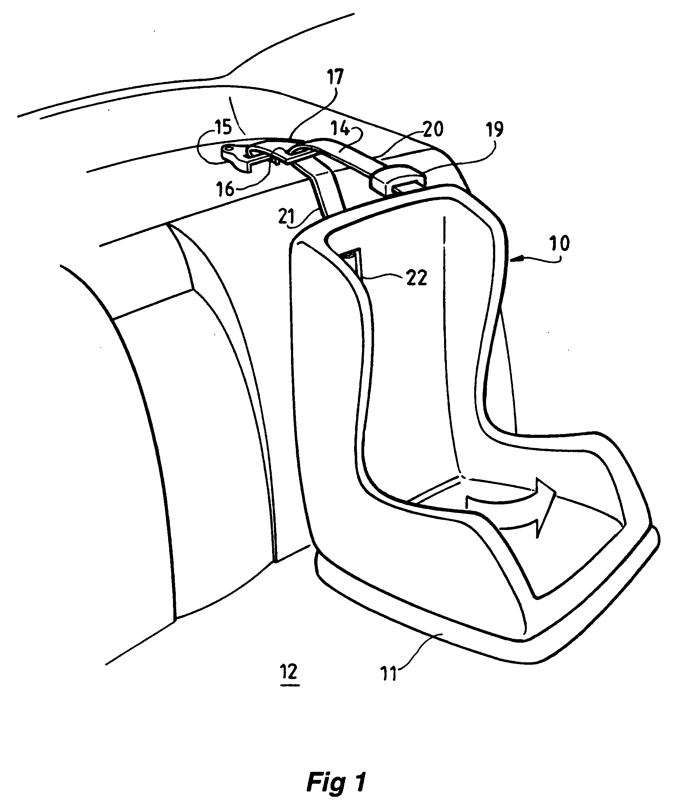

Referring to Figure 1, the safety seat 10 is rotatably attached to a base 11. The base 11 is secured to a motor vehicle seat 12 using the motor vehicle seat safety belt (not shown) or some other form of connection which prevents forward movement of the base 11.

A tether strap 14 is secured to the head end of the safety seat 10 and extends rearwardly of the safety seat 10 to an anchorage point 15. The tether strap 14 locates through an aperture 16 of a tether connector 17. The tether connector 17 attaches to the anchor point 15.

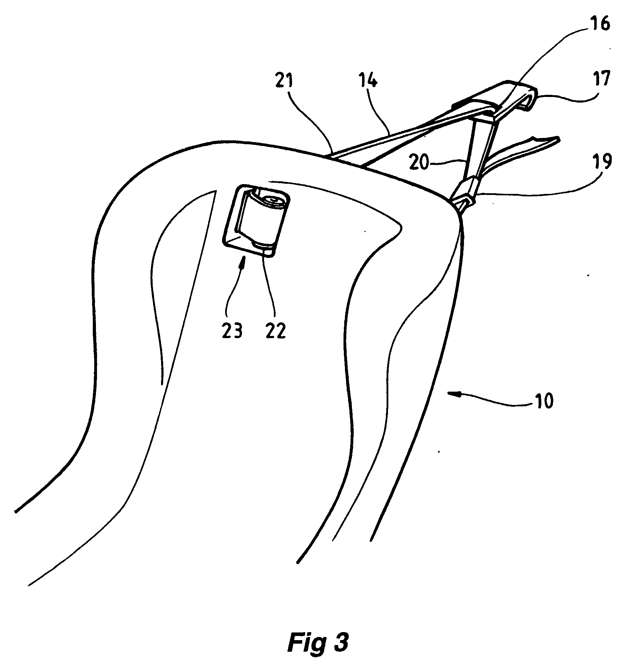

As seen in Figure 3, the tether strap 14 incorporates a length adjuster 19. This enables the tether strap 14 to be lengthened or shortened as required.

A first side 20 of the tether strap 14 is fixed to the head end of the safety seat 10. This can be either by way of threaded fasteners or the tether strap 14 being looped through an aperture of a bracket and then stitched.

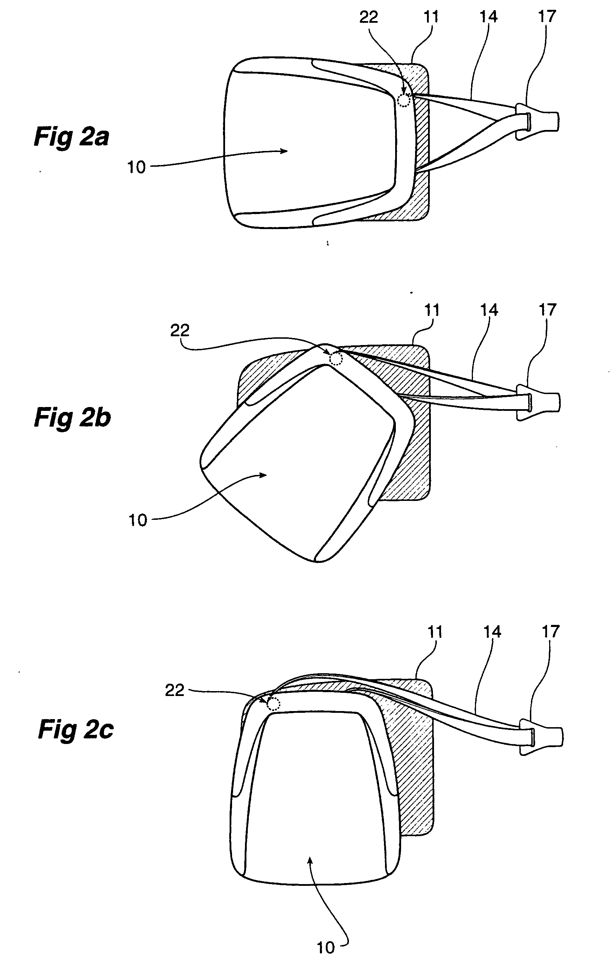

The second end 21 of the tether strap 14 is attached to an inertia reel 22. The inertia reel 22 is located within a recess 23 formed in the backrest of the safety seat 10. As mentioned above, the inertia reel 22 is of the type commonly used in motor vehicle seat belts and allows slow withdrawal of the tether strap 14 but locks if the rate of rotation of the reel exceeds a predetermined amount. It also rewinds under spring action. Accordingly, the safety seat 10 can be rotated on the base 11 which will then cause the tether strap 14 to rotate the inertia reel 22. Provided that the rotation of the safety seat is not excessive, the inertia reel 22 will rotate and allow the tether strap 14 to unroll. Accordingly, as shown in Figures 2a and 2c, the safety seat 10 can be rotated from a forward facing position through 90° so that the safety seat 10 faces the opening of the motor vehicle doorway. This will then make it considerably easier to insert or remove an occupant. As the safety seat 10 is rotated back to the position shown in Fig 2a, the inertia reel will rewind the tether strap 14.

An alternative to this embodiment is to have a single strap extending from the tether connector 17 to a inertia reel 22.

In addition, to using the invention on a forward facing safety seat 10 which is rotated through 90°, the invention is also suited to use with safety seats 10 which are rotated from a forward facing position to a rearward facing position. In this case, either the tether straps shown in Figures 1 to 3 may be used or the alternative of a single tether strap 14 may be used.

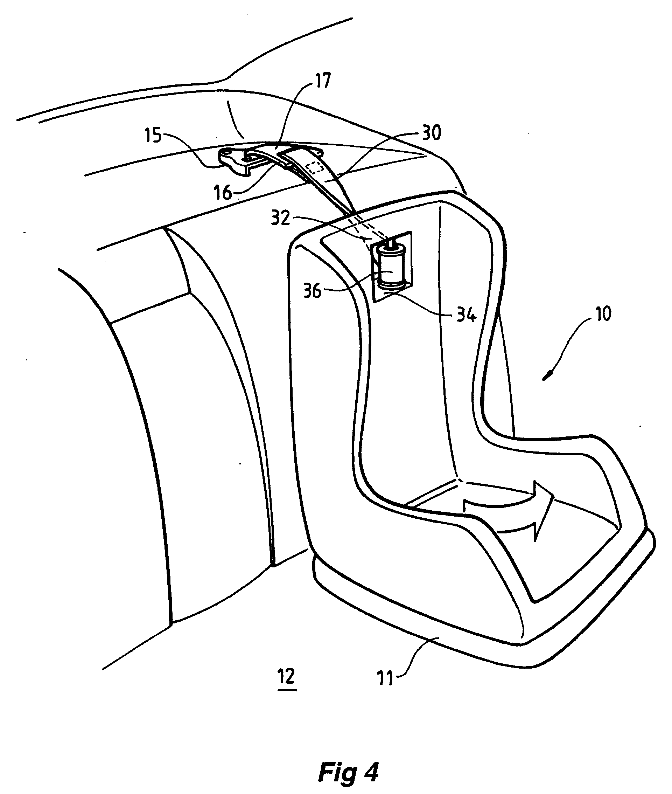

Figure 4 shows an alternative embodiment of tether arrangement for a safety seat in a motor vehicle. In this embodiment the safety seat 10 is rotatably mounted to a base 11. The base 11 is secured to a motor vehicle seat 12 using the motor vehicle seat safety belt (not shown) or some other form of connection which prevents forward movement of the base 11.

A tether strap 30 is secured to the head end of the safety seat 10 and extends rearwardly of the safety seat 10 to an anchorage point 15. The tether strap 30 locates through an aperture 16 of a tether connector 17. The tether connector 17 attaches to the anchor point 15. The tether strap 30 can be disconnected from the anchor point 15 by disconnection of the tether connector 17 from the anchor point 15.

The second end 32 of the tether strap 30 is attached to and wound onto an inertia reel 36. The inertia reel 36 is located within a recess 34 formed in the backrest of the safety seat 10. As mentioned above, the inertia reel 36 is of the type commonly used in motor vehicle seat belts and allows slow withdrawal of the tether strap 30 but locks if the rate of rotation of the reel exceeds a predetermined amount. It also rewinds under spring action. Accordingly, the safety seat 10 can be rotated on the base 11 which will then cause the tether strap 30 to rotate the inertia reel 36. Provided that the rotation of the safety seat is not excessive, the inertia reel 36 will rotate and allow the tether strap 30 to unreel.

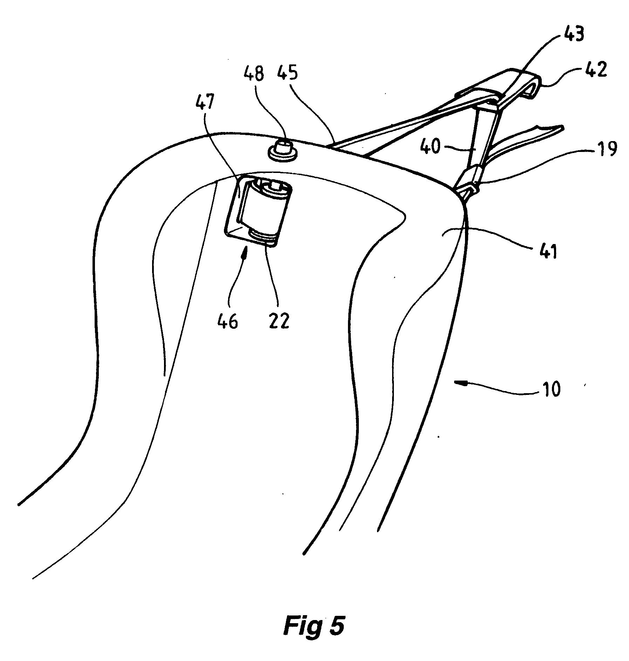

Figure 5 is a part perspective view showing an alternative embodiment of tether arrangement and manually operable take up reel in a safety seat.

In this embodiment the safety seat 10 is rotatably mounted to a base (not shown). The base is secured to a motor vehicle seat using the motor vehicle seat safety belt or some other form of connection which prevents forward movement of the base.

A tether strap 40 is secured to one side 41 the head end of the safety seat 10 and extends rearwardly of the safety seat 10 to a tether connector 42. The tether strap 40 locates through an aperture 43 of the tether connector 42. The tether connector 42 attaches to an anchor point (not shown). The tether strap 40 can be disconnected from the anchor point by disconnection of the tether connector 42 from the anchor point.

The second end 45 of the tether strap 40 is attached to and wound onto a take up reel 46. The take up reel 46 is located within a recess 47 formed in the backrest of the safety seat 10. The take up reel is spring loaded so that as the tether strap 40 is withdrawn from the take up reel 46 the spring is tensioned to provide force necessary to rewind the tether strap onto the reel. A button 48 is provided which when pressed enables unwinding of the tether strap from the take up reel which will tension the spring to enable rewinding of the strap when the safety seat is returned to its forward facing position and the button 48 is pressed again.

## Claims

1. A tether arrangement for a safety seat for a motor vehicle where the safety seat is rotatably mounted to a base, the tether arrangement comprising:
a tether strap,
a tether connector on said strap for attachment to an anchor point, and
a strap take up reel mounted on said safety seat onto which said tether strap is attached and wound so that when said safety seat is rotated with respect to said base, said tether strap is able to unwind from and wind back onto said strap take up reel.

2. A tether arrangement as in Claim 1 wherein the strap take up wheel is an inertia reel.

3. A tether arrangement as in Claim 2 wherein the inertia reel is of a type adapted to sense acceleration or deceleration of the motor vehicle and thereby lock the reel to prevent it from unwinding.

4. A tether arrangement as in Claim 2 wherein the inertia reel is of a type which when a slow continuous force is applied to the tether strap wound onto the reel the reel will rotate allowing the tether strap to unwind from the reel but if a sudden force is applied to the tether strap, the reel will lock whereby if the safety seat is rotated about its base, the reel will rotate thereby allowing the tether strap to lengthen by unwinding from the reel and unwinding of the inertia reel will tension a spring which will act to rewind the strap when the safety seat is returned to its forward facing position but in an accident situation a sudden force applied by the tether strap to the reel will cause it to lock.

5. A tether arrangement as in Claim 1 wherein the strap take up reel is manually operable whereby the take up reel is adapted for a manual operation to enable unwinding of the tether strap and the unwinding of the inertia reel will tension a spring which will act to rewind the strap when the safety seat is returned to its forward facing position.

6. A tether arrangement as in Claim 5 wherein the manual operation is the pressing of a button to release the take up reel.

7. A tether arrangement as in Claim 1 having a single length of tether strap that extends from the strap take up reel at a head end of the safety seat to the anchor point.

8. A tether arrangement as in Claim 1 wherein one end of the tether strap is attached to one side of the safety seat with the tether strap passing through the anchor point and the other end of the tether strap attached and wound onto the strap take up reel at the other side of the safety seat whereby if the safety seat is rotated one way the tether strap can extend directly from the strap take up reel to allow the rotation and if the safety seat is rotated the other way the tether strap can extend from the strap take up reel and pass through the tether connector to allow lengthening of the tether strap on the other side.

9. A tether arrangement as in Claim 1 having an attachment point or mounting recess for the strap take up reel on either side of the head end of the safety seat so that the strap take up reel may be placed on either side of the head end of the safety seat and the other end of the tether strap is mounted at the other side of the head end of the safety seat.

10. A tether arrangement as in Claim 1 having strap take up reels on both sides of the head end of the safety seat so that the seat can be rotated to either the right hand side or the left hand side.
